# EUROPÄISCHE PATENTSCHRIFT

(11) **EP 1 749 696 B1**
(45) Veröffentlichungstag und Bekanntmachung des Hinweises auf die Patenterteilung: **21.10.2009**
(21) Anmeldenummer: 06118232.5
(22) Anmeldetag: 01.08.2006
(51) Int. Cl.: B60Q 1/10, B60Q 1/115

(54) **Verfahren zur Regelung der Leuchtweite von Kraftfahrzeugbeleuchtungseinrichtungen und Leuchtweitenregelungseinrichtung**
Method for adjustment of the lighting range of motor vehicle illumination devices and levelling system
Procédé et dispositif de réglage de la portée des phares d'un véhicule automobile

(30) Priorität: 04.08.2005 DE 102005036622
(43) Veröffentlichungstag der Anmeldung: 07.02.2007
(73) Patentinhaber: Hella KGaA Hueck & Co., 59552 Lippstadt (DE)
(72) Erfinder: Starkmuth, Timo, 59557 Lippstadt (DE); Stiesberg, Justinus, 59889 Eslohe (DE)

(56) Entgegenhaltungen:
- EP-A- 1 205 348
- DE-A1- 19 703 665
- DE-A1- 19 929 906
- FR-A1- 2 861 664
- US-A1- 2003 193 812

## Beschreibung

### STAND DER TECHNIK

Die vorliegende Erfindung betrifft ein Verfahren zur Regelung der Leuchtweite von Kraftfahrzeugbeleuchtungseinrichtungen nach dem Oberbegriff des Anspruchs 1. Darüber hinaus betrifft die vorliegende Erfindung eine Leuchtweitenregelungseinrichtung nach dem Oberbegriff des Anspruchs 8.

Verfahren zur Regelung der Leuchtweite von Kraftfahrzeugbeleuchtungseinrichtungen sowie entsprechende Leuchtweitenregelungseinrichtungen, die zur Durchführung derartiger Verfahren geeignet sind, sind aus dem Stand der Technik in unterschiedlichen Ausführungsformen bereits bekannt.

Aus der DE 199 30 084 C2 ist zum Beispiel ein Kraftfahrzeugscheinwerfer bekannt, bei dem die Leuchtweite eines Kraftfahrzeugscheinwerfers in Abhängigkeit von einem Steuersignal eingestellt werden kann, wobei während des Betriebs des Kraftfahrzeugscheinwerfers neben der Karosserieneigung ein weiteres Sensorsignal erfasst wird, das zum Beispiel die Stellung einer Drosselklappe des Motors, die Luftmenge, die in den Brennraum des Motors gelangt, ein Drehmoment, ein Bremsdruck und/oder ein Lenkwinkel der lenkbaren Räder des Fahrzeugs sein kann.

Die DE 198 24 862 A1 offenbart ein Verfahren zur Regelung der Leuchtweite von Kraftfahrzeugbeleuchtungseinrichtungen, bei dem die Regelung aufgrund der Lage der Karosserie zur Fahrbahn erfolgt und bei dem die Regelung mindestens einen schnellen und mindestens einen langsamen Regelmodus aufweist, wobei die Umschaltung von dem langsamen Regelmodus in den schnellen Regelmodus abhängig von der Längsbeschleunigung des Fahrzeugs erfolgt. Die Umschaltung vom langsamen Regelmodus in den schnellen Regelmodus erfolgt, wenn der Betrag der Änderung der Längsbeschleunigung einen vorgegebenen Schwellwert überschreitet.

Die DE 197 03 665 A1 offenbart eine Leuchtweitenregelungseinrichtung für Kraftfahrzeugbeleuchtungseinrichtungen, umfassend mindestens eine Messdatenerfassungseinrichtung, Regelungsmittel und mindestens eine Stelleinrichtung, wobei die Regelungsmittel für eine Regelung der Leuchtweite der Kraftfahrzeugbeleuchtungseinrichtungen in Abhängigkeit von Einfederungsdaten und der Motordrehzahl eingerichtet sind und in Abhängigkeit von der Motordrehzahl zwischen mindestens einem statischen Regelmodus und mindestens einem dynamischen Regelmodus umschalten können.

Ein Nachteil der aus dem Stand der Technik bekannten Verfahren zur Regelung der Leuchtweite von Kraftfahrzeugbeleuchtungseinrichtungen sowie der entsprechenden Leichtweitenregelungseinrichtungen besteht darin, dass das Lichtbild speziell bei langsamer Fahrt des Fahrzeugs relativ unruhig wirkt. Dieses Verhalten ist insbesondere bei luftgefederten Kraftfahrzeugen zu beobachten, bei denen ein Einfederungssignal, das an allen vier Rädern des Kraftfahrzeugs erfasst werden kann, in relativ kleinen Bereichen schwankt. Da aber gerade nach dem Anfahren die Leuchtweite relativ schnell geregelt wird, tritt häufig ein so genanntes Anfahrblitzen auf, das unter Umständen entgegenkommende Fahrzeuge gefährden kann.

Hier setzt die vorliegende Erfindung an.

### VORTEILE DER ERFINDUNG

Der vorliegenden Erfindung liegt die Aufgabe zugrunde, ein Verfahren zur Regelung der Leuchtweite von Kraftfahrzeugbeleuchtungseinrichtungen sowie eine entsprechende Leuchtweitenregelungseinrichtung vorzuschlagen, bei denen ein unruhiges Lichtbild bei langsamer Fahrt des Kraftfahrzeugs auf einfache Weise vermieden werden kann.

Hinsichtlich des Verfahrens wird die der vorliegenden Erfindung zugrunde liegende Aufgabe durch ein Verfahren mit den Merkmalen des Anspruchs 1 gelöst. Hinsichtlich der Leuchtweitenregelungseinrichtung wird die der vorliegenden Erfindung zugrunde liegende Aufgabe durch eine Leuchtweitenregelungseinrichtung mit den Merkmalen des Anspruchs 7 gelöst. Die Unteransprüche betreffen bevorzugte Weiterbildungen der Erfindung.

Erfindungsgemäß wird vorgeschlagen, dass nach dem Anfahren die Leuchtweite der Kraftfahrzeugbeleuchtungseinrichtungen in einem ersten dynamischen Regelmodus zunächst dynamisch geregelt wird und dass in den mindestens einen statischen Regelmodus umgeschaltet wird, wenn die Motordrehzahl in einem Zeitintervall Δ t einen oberen Schwellwert nicht überschreitet. Dadurch kann erreicht werden, dass die Leuchtweite, deren Sollwerte in Abhängigkeit von den Einfederungsdaten bestimmt werden können, durch eine zusätzliche, vorzugsweise kontinuierlichen Auswertung der Motordrehzahl in Abhängigkeit von bestimmten Schwellwerten und Zeitintervallen geregelt werden kann. Es hat sich gezeigt, dass auf diese Weise insbesondere bei langsamer Fahrt ein erheblich ruhiger wirkendes Lichtbild der Kraftfahrzeugbeleuchtungseinrichtungen erreicht werden kann.

In einer besonders bevorzugten Ausführungsform wird vorgeschlagen, dass die Messung des Zeitintervalls Δ t gestartet wird, sobald die Motordrehzahl einen mittleren Schwellwert überschreitet. Das bedeutet also, dass die Messung des Zeitintervalls Δ t nicht unmittelbar nach dem Anfahren gestartet wird, sondern erst dann, wenn ein mittlerer Schwellwert der Motordrehzahl erreicht wird, der erwarten lässt, dass in dem Zeitintervall Δ t der obere Schwellwert der Motordrehzahl erreicht werden kann. Es hat sich gezeigt, dass durch das Vorsehen des zweiten Schwellwertes der Motordrehzahl die Effizienz und die Genauigkeit der Regelung verbessert werden kann.

Gemäß einer vorteilhaften Ausführungsform kann die Regelung in mindestens einen zweiten dynamischen Regelmodus umschalten, wenn die Motordrehzahl den oberen Schwellwert überschreitet. Somit kann beispielsweise erreicht werden, dass die Leuchtweite der Kraftfahrzeugbeleuchtungseinrichtungen bis zum Erreichen des oberen Schwellwertes zunächst in einem ersten dynamischen Betriebmodus geregelt wird und dass anschließend in einen zweiten dynamischen Regelmodus umgeschaltet wird, in dem das Regelungsverhalten von demjenigen des ersten dynamischen Regelmodus verschieden sein kann.

In einer vorteilhaften Weiterbildung des Verfahrens wird vorgeschlagen, dass darüber hinaus auch Geschwindigkeitsdaten des Kraftfahrzeugs kontinuierlich erfasst werden. Somit kann dann die Regelung in Abhängigkeit von den Einfederungssignalen, der Motordrehzahl und der Fahrzeuggeschwindigkeit erfolgen. So kann zum Beispiel vorgesehen sein, dass beim Unterschreiten eines unteren Schwellwerts der Motordrehzahl und bei einem Stillstand des Fahrzeugs (v= 0 km/h) dynamisch (schnell) geregelt wird.

Vorzugsweise kann mindestens einer der Schwellwerte der Motordrehzahl von einem Benutzer gesetzt werden. Dadurch kann die Regelung an die Erfordernisse des Benutzers auf einfache Art und Weise angepasst werden. Es hat sich insbesondere als vorteilhaft herausgestellt, dass der obere Schwellwert der Motordrehzahl eingestellt werden kann.

Gemäß einer vorteilhaften Weiterbildung der Erfindung wird vorgeschlagen, dass das Zeitintervall Δ t von einem Benutzer gesetzt werden kann.

Eine erfindungsgemäße Leuchtweitenregelungseinrichtung, die zur Durchführung eines Verfahrens nach einem der Ansprüche 1 bis 6 geeignet ist, weist gemäß Anspruch 7 unter anderem die Merkmale auf, dass die Regelungsmittel für eine Regelung der Leuchtweite der Kraftfahrzeugbeleuchtungseinrichtungen in Abhängigkeit von Einfederungsdaten und der Motordrehzahl eingerichtet sind und in Abhängigkeit von der Motordrehzahl zwischen mindestens einem statischen Regelmodus und mindestens einem dynamischen Regelmodus umschalten können. Erfindungsgemäß weisen die Regelungsmittel ihrerseits Mittel zur Erfassung und Einstellung eines Zeitintervalls Δ t auf. Da bei dem oben erläuterten erfindungsgemäßen Verfahren gemäß Anspruch 1 die Leuchtweite der Kraftfahrzeugbeleuchtungseinrichtungen nach dem Anfahren in einem ersten dynamischen Regelmodus zunächst dynamisch geregelt wird und in den mindestens einen statischen Regelmodus umgeschaltet wird, wenn die Motordrehzahl (M1) in einem Zeitintervall Δ t einen oberen Schwellwert (S3) nicht überschreitet, wird durch die erfindungsgemäße Maßnahme, dass die Regelungsmittel ihrerseits Mittel zur Erfassung und Einstellung eines Zeitintervalls Δ t aufweisen, erreicht, dass das entsprechende Zeitintervall Δ t erfasst und bei Bedarf auch eingestellt werden kann. Somit erfolgt die Regelung der Leuchtweite also nicht nur durch eine Erfassung der Einfederungsdaten, die ein Maß für die Neigung der Fahrzeugkarosserie darstellen. Vielmehr wird zusätzlich die sich kontinuierlich ändernde Motordrehzahl berücksichtigt. Dadurch kann zum Beispiel das so genannte Anfahrblitzen, das insbesondere bei langsamer Fahrt eines Kraftfahrzeugs beobachtet werden kann, auf einfache Weise vermieden werden.

In einer bevorzugten Ausführungsform wird vorgeschlagen, dass die Regelungsmittel Einstellmittel umfassen, geeignet, mindestens einen Schwellwert der Motordrehzahl einzustellen. Dadurch kann die Leuchtweitenregelungseinrichtung sehr einfach an die individuellen Bedürfnisse eines Benutzers angepasst werden.

Sowohl die Schwellwerte der Motordrehzahl als auch das Zeitintervall Δ t können jedoch auch werksseitig vorgegeben sein.

Mit Hilfe des erfindungsgemäßen Verfahrens und der erfindungsgemäßen Leuchtweitenregelungseinrichtung kann somit erreicht werden, dass das Lichtbild, das während des Betriebs von den Kraftfahrzeugbeleuchtungseinrichtungen erzeugt wird, erheblich ruhiger erscheint als dies bei den bisher bekannten Verfahren beziehungsweise Leuchtweitenregelungseinrichtungen der Fall war.

### ZEICHNUNGEN

Weitere Merkmale und Vorteile der vorliegenden Erfindung werden deutlich anhand der nachfolgenden Beschreibung eines bevorzugten Ausführungsbeispiels unter Bezugnahme auf die beiliegenden Abbildungen. Darin zeigen
- Fig. 1: ein Blockschaltbild einer Leuchtweitenregelungseinrichtung, die für eine Durchführung eines erfindungsgemäßen Verfahrens zur Regelung der Leuchtweite von Kraftfahrzeugbeleuchtungseinrichtungen geeignet ist;
- Fig. 2: eine Darstellung der Einfederungssignale eines Kraftfahrzeugs bei relativ langsamer Fahrt, die mittels einer Messdatenerfassungseinrichtung der erfindungsgemäßen Leuchtweitenregelungseinrichtung kontinuierlich erfasst werden;
- Fig. 3: eine Darstellung der Sollwerte der Leuchtweitenregelung, die von Regelungsmitteln der Leuchtweitenregelungseinrichtung aus den Einfederungssignalen gemäß Fig. 2 kontinuierlich bestimmt werden;
- Fig. 4: eine Darstellung der Geschwindigkeitssignale, die an den beiden Hinterrädern des Kraftfahrzeugs von der Messdatenerfassungseinrichtung kontinuierlich erfasst werden;
- Fig. 5: eine Darstellung der Motordrehzahl, die während des Betriebs des Kraftfahrzeugs kontinuierlich von der Messdatenerfassungseinrichtung erfasst wird.

### BESCHREIBUNG DES AUSFÜHRUNGSBEISPIELS

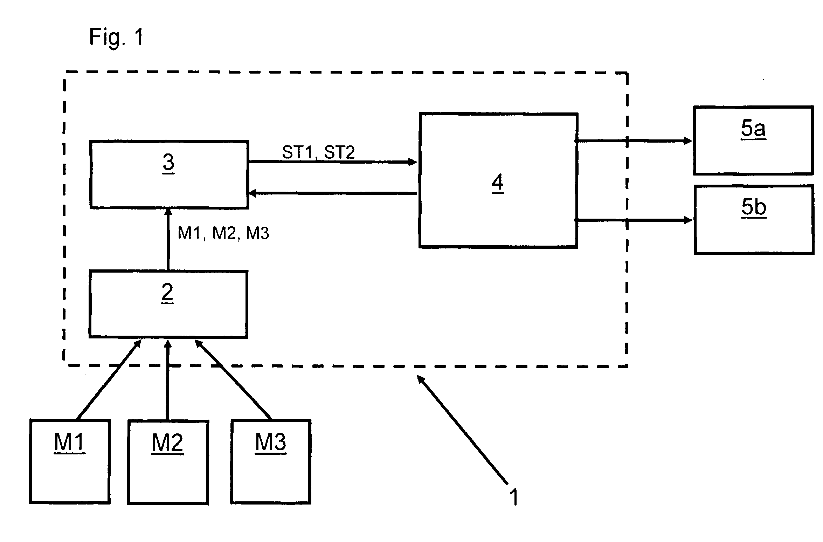

Zunächst wird auf Fig. 1 Bezug genommen, in der ein Blockdiagramm einer Leuchtweitenregelungseinrichtung 1, die für eine Durchführung eines erfindungsgemäßen Verfahrens zur Regelung der Leuchtweite von Kraftfahrzeugbeleuchtungseinrichtungen 5a, 5b geeignet ist, dargestellt ist.

Die Leuchtweitenregelungseinrichtung 1 umfasst in diesem Ausführungsbeispiel eine Messdatenerfassungseinrichtung 2, die für eine kontinuierliche Erfassung einer Mehrzahl fahrzeugbezogener Messdaten geeignet ist, Regelungsmittel 3 sowie eine Stelleinrichtung 4, die den beiden Kraftfahrzeugbeleuchtungseinrichtungen 5a, 5b zugeordnet ist. Es kann in einer alternativen Ausführungsform der Leuchtweitenregelungseinrichtung 1 auch vorgesehen sein, dass jedem der Kraftfahrzeugscheinwerfer 5a, 5b jeweils eine separate Stelleinrichtung zugeordnet ist. Mittels der Stelleinrichtung 4 kann die Leuchtweite der Kraftfahrzeugbeleuchtungseinrichtungen 5a, 5b während des Betriebs der Leuchtweitenregelungseinrichtung 1 zum Beispiel durch eine Änderung digitaler Filter angepasst werden.

Die Messdatenerfassungseinrichtung 2 erfasst während des Betriebs der Leuchtweitenregelungseinrichtung 1 mit Hilfe geeigneter Sensormittel kontinuierlich Messwerte M1, M2, M3, die für die Regelung der Leuchtweite der Fahrzeugscheinwerfer 5a, 5b mit Hilfe des hier vorgestellten Verfahrens benötigt werden. Zu diesem Zweck werden mit Hilfe der Messdatenerfassungseinrichtung 2 Einfederungsdaten M1, die insbesondere ein Maß für Unebenheiten der Fahrbahn sind, die Motordrehzahl M2 sowie Geschwindigkeitsdaten M3 erfasst und an die Regelungsmittel 3 weitergeleitet. Beispielsweise können die Geschwindigkeitsdaten M3, die mittels der Messdatenerfassungseinrichtung 2 erfasst werden, die Momentangeschwindigkeiten zweier Hinterräder des Kraftfahrzeugs sein. Es können alternativ auch die Momentangeschwindigkeiten zweier Vorderräder des Kraftfahrzeugs erfasst werden. Darüber hinaus kann die Fahrzeuggeschwindigkeit auch auf andere Weise erfasst werden.

Die von der Messdatenerfassungseinrichtung 2 während des Betriebs der Leuchtweitenregelungseinrichtung 1 kontinuierlich erfassten Messdaten M1, M2, M3 werden an die Regelungsmittel 3 weitergeleitet, die daraus kontinuierlich Stellgrößen ST1 und ST2 berechnen, welche der Stelleinrichtung 4, zugeführt werden. Mit Hilfe der Stelleinrichtung 4 werden dann beispielsweise durch Filterungsänderungen die Leuchtweiten der beiden Kraftfahrzeugbeleuchtungseinrichtungen 5a, 5b in Abhängigkeit von den Stellgrößen ST1, ST2 kontinuierlich den aktuellen Gegebenheiten angepasst.

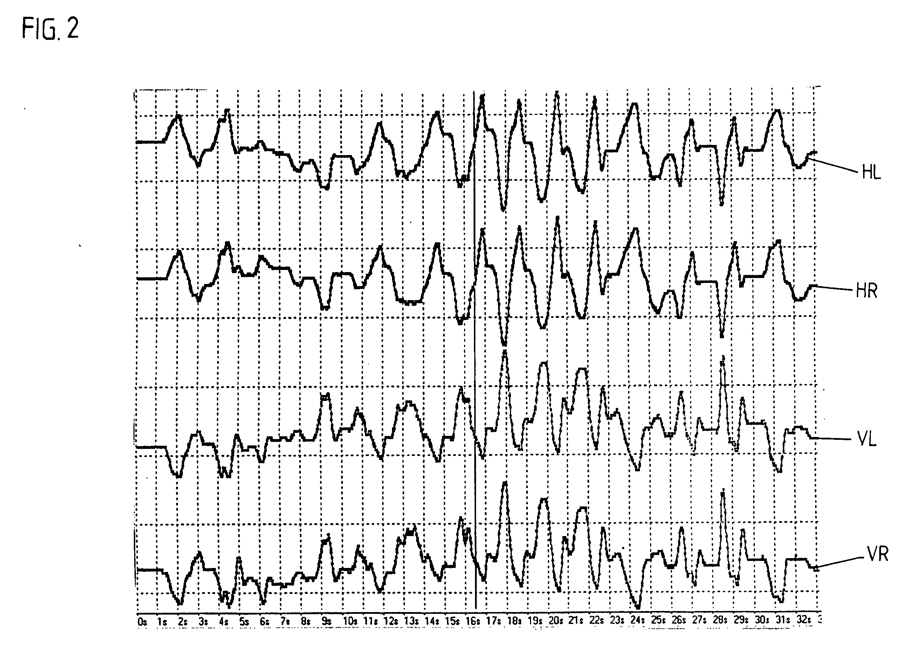

In Fig. 2 sind Einfederungssignale M1, welche bei langsamer Fahrt des Kraftfahrzeugs an dessen Federungseinrichtungen erfasst werden können, grafisch dargestellt. Man erkennt, dass vier Höhenwerte HL (hinten links), HR (hinten rechts), VL (vorne links), VR (vorne rechts) um einen Nullpunkt, der am Anfang der Messkurve des entsprechenden Rades durch einen waagerechten Verlauf angedeutet ist, um den entsprechenden Nullpunkt schwanken und sich damit kontinuierlich ändern. Diese Einfederungssignale M1 werden mittels der Messdatenerfassungseinrichtung 2 während des Betriebs der Leuchtweitenregelungseinrichtung 1 kontinuierlich erfasst und an die Regelungsmittel 3 zur Weiterverarbeitung geleitet.

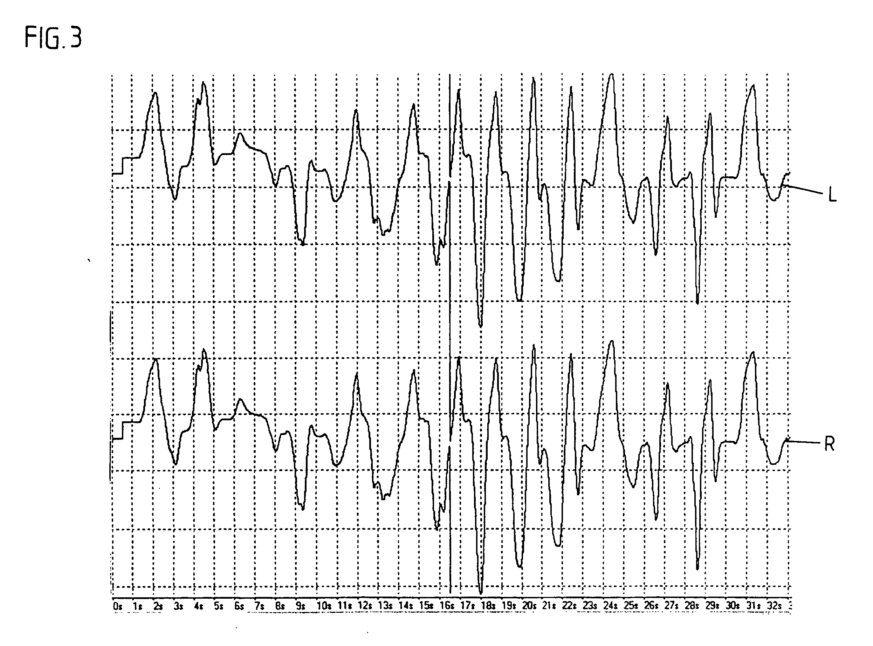

In Fig. 3 sind die mit Hilfe der Regelungsmittel 3 berechneten Sollpositionen der Leuchtweitenregelung für beide Kraftfahrzeugbeleuchtungseinrichtungen 5a, 5b dargestellt. Man erkennt, dass ausgehend von den in Fig. 2 gezeigten und kontinuierlich erfassten Einfederungssignalen M1 eine ständige Anpassung und Verstellung der Leuchtweite bezüglich einer 10 m von den Kraftfahrzeugbeleuchtungseinrichtungen 5a, 5b entfernten Wand gemäß den berechneten Sollwerten erfolgen soll.

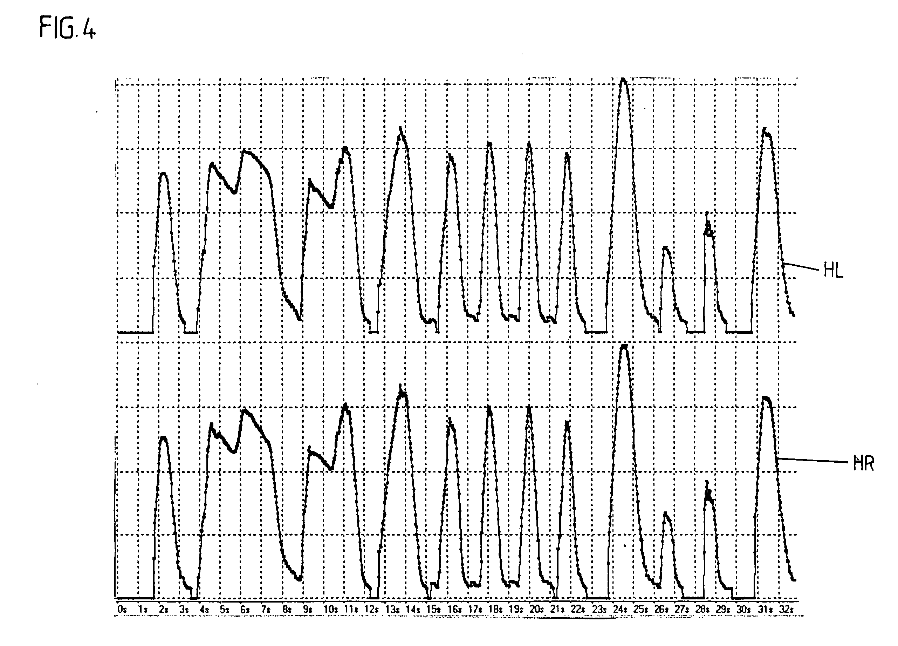

In Fig. 4 sind die entsprechenden Geschwindigkeitssignale M3 bei langsamer Fahrt dargestellt, die am hinteren linken Rad (HL) sowie am hinteren rechten Rad (HR) des Kraftfahrzeugs erfasst werden. Man erkennt, dass sich in diesem Beispiel die Geschwindigkeiten kontinuierlich ändern.

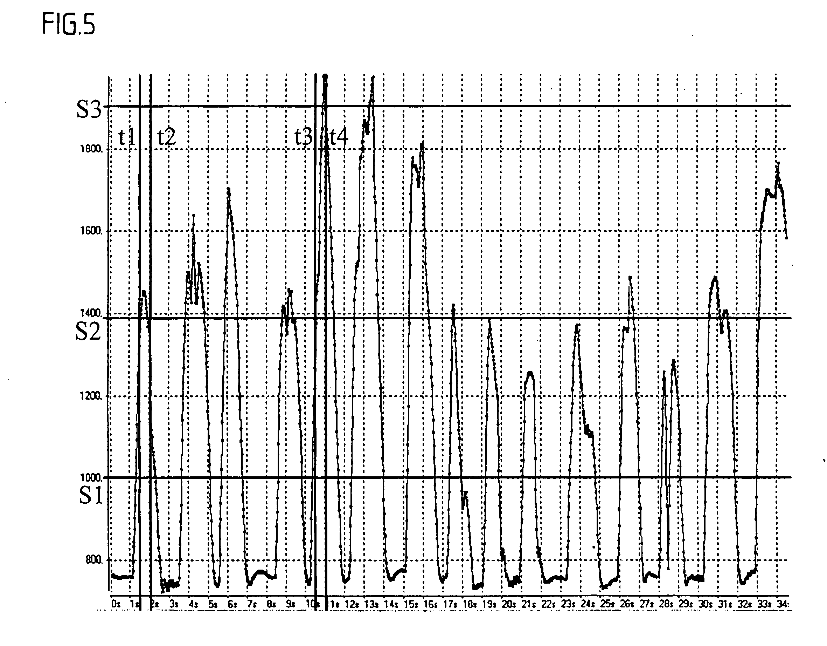

In Fig. 5 ist schließlich noch die zugehörige Motordrehzahl M2 dargestellt, die mittels der Messdatenerfassungseinrichtung 2 während des Betriebs der Leuchtweitenregelungseinrichtung 1 ebenfalls kontinuierlich erfasst wird. Anhand der Darstellung Fig. 5 wird im Folgenden das Prinzip des Verfahrens zur Leuchtweitenregelung unter Berücksichtigung der Motordrehzahl M2 näher erläutert. Man erkennt in dieser Darstellung drei Schwellwerte S1, S2 und S3 der Motordrehzahl M2, und zwar einen unteren Schwellwert S1, einen mittleren Schwellwert S2 sowie einen oberen Schwellwert S3. Beispielsweise kann der untere Schwellenwert S1, wie in Fig. 5 zu erkennen, auf etwa 1.000 U/min (U/min = Umdrehungen pro Minute) eingestellt sein. Der mittlere Schwellwert S2 ist in diesem Beispiel auf einen Wert gesetzt, der etwas unterhalb von 1.400 U/min. liegt und der obere Schwellwert S3 ist auf einen Wert von etwas über 1.800 U/min gesetzt. Vorzugsweise können die Schwellwerte S1, S2 und S3 der Motordrehzahl M2 durch geeignete Einstellmittel benutzerdefiniert angepasst werden. Die hier gezeigten Schwellwerte S1, S2 und S3 der Motordrehzahl M2 sind somit nur beispielhaft zu verstehen, um das Grundprinzip des Verfahrens zur Regelung der Leuchtweite der Kraftfahrzeugbeleuchtungseinrichtungen 5a, 5b nachfolgend näher zu erläutern.

Ausgehend von einer Leerlaufdrehzahl des Motors, die, wie in Fig. 5 zu erkennen, kleiner als 800 U/min ist, ändert sich die Motordrehzahl M2 beim Anfahren dahingehend, dass nach einer gewissen Zeit die mittlere Schwelle S2 der Motordrehzahl M2 erreicht und überschritten wird. Beim Überschreiten der mittleren Schwelle S2 zum Zeitpunkt t1 aktivieren die Regelungsmittel 2 über geeignete Zeiterfassungsmittel eine Zeitmessung. In einem ersten Zeitintervall Δ t = t2 - t1, das zum Beispiel auf Δ t = 500 ms gesetzt sein kann, regeln die Regelungsmittel 3 die Leuchtweite in einem ersten Regelmodus dynamisch und stellen somit der Stelleinrichtung 4 dynamisch die Stellgrößen ST1, ST2 zur Verfügung, damit die Leuchtweiten der Kraftfahrzeugbeleuchtungseinrichtungen 5a, 5b dynamisch in Abhängigkeit von den Einfederungssignalen M1 an die jeweiligen Gegebenheiten angepasst werden können.

Wird innerhalb des Zeitintervalls Δ t der obere Schwellwert S3 der Motordrehzahl M1 nicht überschritten, schaltet die Regelungseinrichtung 3 von dem ersten dynamischen Regelmodus in einen statischen Regelmodus um. Das hat zur Folge, dass in diesem statischen Regelmodus die Regelung der Leuchtweite der Kraftfahrzeugbeleuchtungseinrichtungen 5a, 5b in zeitlicher Hinsicht langsamer (statischer) erfolgt als im ersten dynamischen Regelmodus. Auf diese Weise wird in diesem Bereich ein relativ ruhiges Lichtbild der Kraftfahrzeugbeleuchtungseinrichtungen 5a, 5b erzeugt.

Fällt die Motordrehzahl M2 anschließend weiter unter den unteren Schwellwert S1 ab, und ist darüber hinaus die Geschwindigkeit des Fahrzeugs V = 0 km/h, regeln die Regelungsmittel 3 die Leuchtweite der Kraftfahrzeugbeleuchtungseinrichtungen 5a, 5b im dynamischen Regelmodus wiederum schnell.

Bei jedem Überschreiten des mittleren Schwellwerts S2 der Motordrehzahl M2 wird die Zeitmessung erneut aktiviert. Wird dabei wiederum in dem Zeitintervall Δ t der obere Schwellwert S3 der Motordrehzahl nicht überschritten, so schaltet das Regelungsmittel 3, wie oben bereits beschrieben, erneut aus dem dynamischen in den statischen Regelmodus um.

Anhand des in Fig. 5 gezeigten Zeitintervalls Δ t = t4 - t3 kann man erkennen, wie sich die Leuchtweitenregelung verhält, wenn in dem Zeitintervall Δ t der obere Schwellwert S3 der Motordrehzahl überschritten wird. Wird zum Zeitpunkt t = t3 der mittlere Schwellwert S2 wiederum überschritten, wird erneut eine Zeitmessung gestartet. Die Regelungsmittel 3 regeln die Leuchtweite der Kraftfahrzeugbeleuchtungseinrichtungen 5a, 5b zunächst im ersten Regelmodus dynamisch. Wird im Zeitintervall Δ t = t4 - t3 der obere Schwellwert S3 der Motordrehzahl M2 überschritten, bleiben die Regelungsmittel 3 weiterhin im dynamischen Regelmodus und regeln die Leuchtweite weiterhin dynamisch. Die Regelungsmittel 3 können auch in einen zweiten dynamischen Regelmodus geschaltet werden, dessen Regelungseigenschaften von denjenigen des ersten dynamischen Regelmodus verschieden sein können.

Mit Hilfe des hier vorgestellten Verfahrens zur Regelung der Leuchtweite von Kraftfahrzeugbeleuchtungseinrichtungen 5a, 5b sowie mittels der entsprechenden Leuchtweitenregelungseinrichtung 1 kann somit erreicht werden, dass die Regelung der Leuchtweite speziell bei relativ geringer, gleichförmiger Geschwindigkeit des Kraftfahrzeugs zum Beispiel durch eine Filterungsänderung der Leuchtweitenregelungseinrichtung 1 ein erheblich ruhigeres Lichtbild erzeugt als dies mit Hilfe der aus dem Stand der Technik bekannten Verfahren beziehungsweise mit den entsprechenden Leuchtweitenregelungseinrichtungen möglich ist. Das Auftreten des unruhigen Lichtbildes bei langsamer Fahrt, das insbesondere bei luftgefederten Fahrzeugen zu beobachten ist, kann somit vermieden werden.

Das erfindungsgemäße Verfahren sieht vor, dass nach dem Anfahren die Regelungsmittel 3 in einem ersten Regelmodus die Leuchtweite zunächst dynamisch regeln. Sollte jedoch die Motordrehzahl M2 den oberen Schwellwert S3 nicht in einem vorgegebenen beziehungsweise benutzerdefiniert vorgebbaren Zeitintervall, das beispielsweise auf Δ t = 500 ms gesetzt sein kann, überschreiten, schaltet die Leuchtweitenregelungseinrichtung 1 in einen Regelmodus um, in dem die Leuchtweitenregelungseinrichtung 1 statisch und somit wesentlich langsamer regelt.

Somit werden Schwankungen in den Eingangssignalen, die insbesondere von der Einfederung des Fahrzeugs herrühren können, nicht im Lichtbild der Kraftfahrzeugbeleuchtungseinrichtungen 5a, 5b dargestellt. Das Leuchtverhalten ist somit insgesamt viel ruhiger als dies bei den aus dem Stand der Technik bekannten Leuchtweitenregelungseinrichtungen der Fall ist.

## Patentansprüche

1. Verfahren zur Regelung der Leuchtweite von Kraftfahrzeugbeleuchtungseinrichtungen (5a, 5b), bei dem zumindest die Motordrehzahl (M2) sowie Einfederungsdaten (M1), die von der Neigung der Fahrzeugkarosserie relativ zur Fahrbahn abhängen, kontinuierlich erfasst werden, und bei dem die Regelung zwischen mindestens einem dynamischen und mindestens einem statischen Regelmodus umschalten kann, wobei die Regelung in statischen Regelmodus in zeitlicher Hinsicht langsamer erfolgt als in dynamischen Regelmodus, **dadurch gekennzeichnet, dass** nach dem Anfahren die Leuchtweite der Kraftfahrzeugbeleuchtungseinrichtungen (5a, 5b) in einem ersten dynamischen Regelmodus zunächst dynamisch geregelt wird und dass in den mindestens einen statischen Regelmodus umgeschaltet wird, wenn die Motordrehzahl (M1) in einem Zeitintervall Δ t einen oberen Schwellwert (S3) nicht überschreitet.

2. Verfahren nach Anspruch 1, **dadurch gekennzeichnet, dass** die Messung des Zeitintervalls Δ t gestartet wird, sobald die Motordrehzahl (M2) einen mittleren Schwellwert (S2) überschreitet.

3. Verfahren nach Anspruch 1 oder 2, **dadurch gekennzeichnet, dass** die Regelung in mindestens einen zweiten dynamischen Regelmodus umschaltet, wenn die Motordrehzahl (M2) den oberen Schwellwert (S3) überschreitet.

4. Verfahren nach einem der Ansprüche 1 bis 3, **dadurch gekennzeichnet**, **dadurch gekennzeichnet, dass** darüber hinaus auch Geschwindigkeitsdaten (M3) des Kraftfahrzeugs kontinuierlich erfasst werden.

5. Verfahren nach einem der Ansprüche 1 bis 4, **dadurch gekennzeichnet, dass** mindestens einer der Schwellwerte (S1, S2, S3) der Motordrehzahl (M2) von einem Benutzer gesetzt werden kann.

6. Verfahren nach einem der Ansprüche 1 bis 5, **dadurch gekennzeichnet, dass** das Zeitintervall Δ t von einem Benutzer gesetzt werden kann.

7. Leuchtweitenregelungseinrichtung (1) für Kraftfahrzeugbeleuchtungseinrichtungen (5a, 5b) zur Durchführung eines Verfahrens nach einem der Ansprüche 1 bis 6, umfassend mindestens eine Messdatenerfassungseinrichtung (2), Regelungsmittel (3) und mindestens eine Stelleinrichtung (4), wobei die Regelungsmittel (3) für eine Regelung der Leuchtweite der Kraftfahrzeugbeleuchtungseinrichtungen (5a, 5b) in Abhängigkeit von Einfederungsdaten (M1) und der Motordrehzahl (M2) eingerichtet sind und in Abhängigkeit von der Motordrehzahl (M2) zwischen mindestens einem statischen Regelmodus und mindestens einem dynamischen Regelmodus umschalten können, **dadurch gekennzeichnet, dass** die Regelungsmittel (3) Mittel zur Erfassung und Einstellung eines Zeitintervalls Δ t aufweisen, und so ausgebildet sind, dass nach dem Anfahren die Leuchtweite der Kraftfahrzeugbeleuchtungseinrichtungen (5a, 5b) in einem ersten dynamischen Regelmodus zunächst dynamisch geregelt wird und dass in den mindestens einen statischen Regelmodus umgeschaltet wird, wenn die Motordrehzahl (M1) in einem Zeitintervall Δ t einen oberen Schwellwert (S3) nicht überschreitet.

8. Leuchtweitenregelungseinrichtung (1) nach Anspruch 7, **dadurch gekennzeichnet, dass** die Regelungsmittel (3) Einstellmittel umfassen, geeignet, mindestens einen Schwellwert (S1, S2, S3) der Motordrehzahl (M2) einzustellen.

## Claims

1. Method of leveling the light range of vehicle lighting equipment (5a, 5b), which comprises at least the continuous measuring of the engine speed (M2) and the spring deflection (M1) as dependent on the inclination of the vehicle body against the road surface, and which further comprises the ability to change between at least one dynamic leveling mode and at least one static leveling mode such that steady-state leveling in the static leveling mode is slower in time than dynamic leveling, **characterized in that**, after first starting to drive, a first dynamic leveling mode first of all dynamically levels the light range of the vehicle lighting equipment (5a, 5b) and that the at least one static leveling mode is attained when the engine speed (M1) no longer exceeds an upper threshold (S3) within an interval Δ t.

2. Method of claim 1, **characterized in that** measuring the interval Δ t starts when the engine speed (M2) exceeds a mean threshold (S2).

3. Method of claim 1 or 2, **characterized in that** leveling attains at least one second dynamic leveling mode when the engine speed (M2) exceeds the upper threshold (S3).

4. Method of claims 1 to 3, **characterized in that** it further comprises the ability to continuously measure the vehicle speed data (M3).

5. Method of claims 1 to 4, **characterized in that** a user is able to set at least one of the thresholds (S1, S2, S3) of the engine speed (M2).

6. Method of claims 1 to 5, **characterized in that** a user can set the interval Δ t.

7. Light range leveling equipment (1) for vehicle lighting equipment (5a, 5b) for implementing a method of claims 1 to 6, comprising at least one measuring data collection device (2), means of control (3), and at least one adjustment device (4), wherein said means of leveling control (3) are designed to level the light range of the vehicle lighting equipment (5a, 5b) with reference to the spring deflection (M1) and the engine speed (M2), and wherein said means of leveling control (3) have the ability of referencing the engine speed (M2) to change between at least one static leveling mode and at least one dynamic leveling mode, **characterized in that** the means of leveling control (3) further comprise means of measuring and setting an interval Δ t and are designed such that, after first starting to drive, a first dynamic leveling mode first of all dynamically levels the light range of the vehicle lighting equipment (5a, 5b) and that the at least one static leveling mode is attained when the engine speed (M1) no longer exceeds an upper threshold (S3) within an interval Δ t.

8. Light range leveling equipment (1) of claim 7, **characterized in that** the means of leveling control (3) comprise means of adjustment which are able to adjust at least one threshold (S1, S2, S3) of the engine speed (M2).

## Revendications

1. Procédé de régulation de la portée de dispositifs d'éclairage de véhicules (5a, 5 b) pour lequel au moins le régime moteur (M2) et les données de compression de ressort (M1) qui dépendent de l'inclinaison relative de la carrosserie du véhicule par rapport à la route sont constamment saisis et pour lequel la régulation peut commuter au moins entre un mode de régulation dynamique et au moins un mode de régulation statique, la régulation en mode de régulation statique durant plus lentement que le mode de régulation dynamique, **caractérisé en ce que,** après le démarrage, la portée des dispositifs d'éclairage du véhicule (5a, 5b) est tout d'abord réglée dynamiquement dans un premier mode de régulation dynamique et que la commutation se fait au moins dans un mode de régulation statique lorsque le régime du moteur (M1) dans un intervalle de temps Δ t ne dépasse pas une valeur de seuil supérieure (S3).

2. Procédé selon la revendication 1, **caractérisé en ce que** la mesure de l'intervalle de temps Δ t est démarrée dès que le régime du moteur (M2) dépasse une valeur de seuil moyenne (S2).

3. Procédé selon la revendication 1 ou 2, **caractérisé en ce que** le réglage commute dans au moins un second mode de régulation dynamique lorsque le régime du moteur (M2) dépasse la valeur de seuil supérieure (S3).

4. Procédé selon l'une des revendications 1 à 3, **caractérisé en ce que,** d'autre part, les données de vitesse (M3) du véhicule sont également saisies continuellement.

5. Procédé selon l'une des revendications 1 à 4, **caractérisé en ce qu'**au moins une des valeurs de seuil (S1, S2, S3) du régime du moteur (M2) puisse être définie par l'utilisateur.

6. Procédé selon l'une des revendications 1 à 5, **caractérisé en ce que** l'intervalle de temps Δ t peut être défini par l'utilisateur.

7. Dispositif de régulation de la portée (1) pour des dispositifs d'éclairage de véhicule (5a, 5b) en vue de la réalisation d'un procédé selon l'une des revendications 1 à 6, comprenant au moins un dispositif de saisie des données mesurées (2), un moyen de régulation (3) et au moins un dispositif de réglage (4), les moyens de régulation (3) étant prévus pour une régulation de la portée des dispositifs d'éclairage de véhicule (5a, 5b) en fonction des données de compression de ressort (M1) et du régime du moteur (M2) et pouvant commuter en fonction du régime du moteur (M2) entre au moins un mode de régulation statique et au moins un mode de régulation dynamique, **caractérisé en ce que** les moyens de régulation (3) présentent des moyens de saisie et de réglage d'un intervalle de temps Δ t et qu'ils sont formés de manière que, après le démarrage, la portée des dispositifs d'éclairage du véhicule (5a, 5b) est tout d'abord réglée dynamiquement dans un premier mode de régulation dynamique et que la commutation se fait au moins dans un mode de régulation statique lorsque le régime du moteur (M1) dans un intervalle de temps Δ t ne dépasse pas une valeur de seuil supérieur (S3).

8. Dispositif de régulation de la portée (1) selon la revendication 7, **caractérisé en ce que** les moyens de régulation (3) comprennent des moyens de réglage appropriés à régler au moins une valeur de seuil (S1, S2, S3) du régime du moteur (M2).
